# EUROPEAN PATENT SPECIFICATION

(11) **EP 2 824 474 B1**
(45) Date of publication and mention of the grant of the patent: **22.01.2020**
(21) Application number: 14175949.8
(22) Date of filing: 07.07.2014
(51) Int. Cl.: F41G 7/22, G01S 3/784, G02B 13/14, G02B 5/20, G02B 19/00

(54) **Dual function focal plane array seeker**
Doppelfunktions-Fokalebenen-Arraysucher
Détecteur de matrice de plan focal à double fonction

(30) Priority: 09.07.2013 US 201313937636
(43) Date of publication of application: 14.01.2015
(73) Proprietor: Rosemount Aerospace Inc., Burnsville, MN 55306-4898 (US)
(72) Inventor: Rutkiewicz, Robert D., Edina, MN Minnesota 55410 (US); Ell, Todd A., Savage, MN Minnesota 55378 (US)
(74) Representative: Dehns

(56) References cited:
- EP-A1- 1 956 336
- FR-A1- 2 687 795
- US-A- 4 524 359
- US-A- 5 027 202
- US-A1- 2009 228 159
- US-A1- 2010 127 174
- US-A1- 2013 082 183
- US-B1- 6 734 911

## Description

### BACKGROUND

The present invention relates to systems for tracking an object and in particular to systems and methods for orienting an optical tracking system toward an off-axis object.

Laser designation technologies used in munitions guidance systems use a laser to illuminate an intended target, often up to the point of the munitions impact with the target. These technologies may include an optical tracking system for providing linear image resolution of the target. Linear image resolution is generally limited to those targets that are already on or near an optical axis of the optical tracking system. EP 1956336 A1 discloses a method of tracking an object, the method comprising receiving light from the object at a lens; directing the light on to a pair of photodetectors; and using a processor to determine a direction of the object based on the light received by the photodetectors. US 2013/082183 discloses a tracking sensor for a directed infra-red countermeasure system. US 2010/127174 discloses a multi-mode detector for simultaneous detection of two or more wavelengths of light. US 6734911 discloses a tracking system according to the preamble of claim 8, and a method according to the preamble of claim 1.

### SUMMARY

According to a first aspect, the present invention provides a method of tracking an object, comprising: receiving light from the object at a wide-angle foveated lens, the lens having an optical axis and a surface proximate an object space of the lens having a non-linear peripheral portion and an on-axis portion; directing light received at the on-axis portion onto a central region of a photodetector array located at a focal plane of the lens and directing light received at the non-linear peripheral portion of the lens onto an annular region of the photodetector array; using a processor to: use a location at the annular region of the photodetector array of the light passing through the peripheral portion of the lens to determine a direction of the object with respect to the optical axis of the lens; and using the determined direction to orient the optical axis of the lens toward the object to track the object and characterized by the step of determining the direction of the object further comprises summing signal intensities for at least two quadrants of the photodetector array and determining the direction of the object with respect to the optical axis from a difference in the summed signal intensities.

According to a second aspect, the present invention provides a system for tracking an object, comprising: a photodetector array for receiving light from the object; a wide-angle foveated lens arranged so that the photodetector array is in a focal plane of the lens, the lens having an optical axis and a surface proximate an object space having an on-axis portion providing an image of the object at a central region of the photodetector array and a non-linear peripheral portion away from the optical axis of the lens for directing light received from the object onto an annular region of the photodetector array; and a processor configured to: determine a direction of the object with respect to the optical axis from a location on the photodetector array of the light directed onto the annular region of the photodetector array through the non-linear peripheral portion of the lens, use the determined direction to orient the optical axis of the lens toward the object to track the object and characterized in that the processor is further configured to determine the direction of the object by summing signal intensities for at least two quadrants of the photodetector array and determining a difference in the signal intensities.

Additional features and advantages are realized through the techniques of the present invention. Other embodiments and aspects of the invention are described in detail herein and are considered a part of the claimed invention. For a better understanding of the invention with the advantages and the features, refer to the description and to the drawings.

### BRIEF DESCRIPTION OF THE SEVERAL VIEWS OF THE DRAWINGS

Certain preferred embodiments of the present invention will now be described in greater detail by way of example only and with reference to the accompanying drawings, in which:
Figure 1 shows an optical tracking system in an exemplary embodiment of the present invention;
Figure 2 shows several views of a focal plane array of the exemplary tracking system of Figure 1; and
Figures 3 and 4 illustrate various uses of the optical tracking system of Figure 1 to track a target.

### DETAILED DESCRIPTION

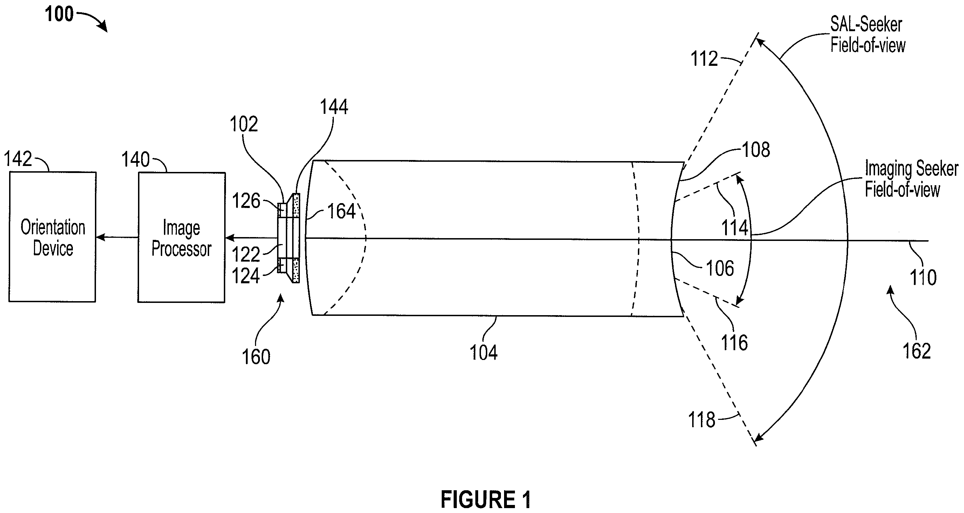

Figure 1 shows an optical tracking system 100 according to one embodiment. The illustrated optical tracking system 100 may be disposed on a missile or other projectile for striking a target. The illustrated tracking system 100 includes a focal plane array 102 that includes an array of photodetectors (also referred to herein as pixels). The pixels may be arranged in a substantially lattice pattern such as a square pattern. A lens 104 is placed in front of the focal plane array 102 such that the focal plane array 102 is located substantially at a focal point of the lens 104 in an image space 160 of the lens 104. The lens 104, therefore, focuses light from an object in an object space 162 of the lens 104 onto the focal plane array 102. The lens 104 may be a wide-angle foveated lens. Proximate the image space 160, the lens 104 may include an optical surface 164 for focusing light at the focal plane array 102. Proximate the object space 162, the lens 104 includes a linear (on-axis) optical surface 106 along an optical axis 110 of the lens 104 and a peripheral (off-axis) optical surface 108. The linear optical surface 106 includes an optical surface suitable for providing an image at the focal plane array 102 suitable for image resolution. The peripheral optical surface 108 includes a non-linear optical surface that provides a wide-angle viewing range capability for the optical tracking system 100. In an exemplary embodiment, the linear optical surface 106 and the peripheral optical surface 108 are formed on a single lens 104. Due to the wide-angle viewing capabilities of the peripheral optical surface 108, images of objects viewed via the peripheral optical surface 108 are general too small for image resolution at the focal plane array 102. Light passing through the peripheral optical surface 108 may nonetheless be detected at the focal plane array 102 and used to detect a direction of an object with respect to the optical tracking system 100 using the methods disclosed herein.

A field of view for the linear optical surface 106 is defined by the angle between lines 114 and 116. In various embodiments, this angle is about 20° to about 30° (or about 10° to about 15° as measured from the optical axis 110). Light passing through the linear optical surface 106 illuminates a central region 122 on the focal plane array 102.

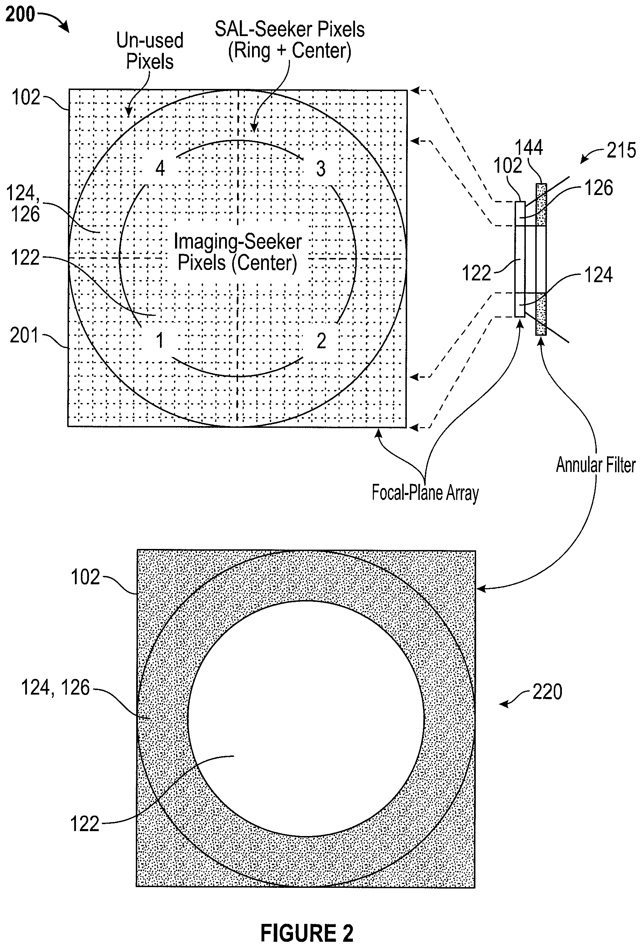

A field-of-view for the peripheral optical surface 108 is defined by the angle between lines 112 and 114 or, alternately, by the angle between lines 116 and 118. In various embodiments, due to the symmetry of the optical tracking system 100, lines 112 and 118 are rotationally invariant and lines 114 and 116 are rotationally invariant. Thus, the angle between lines 112 and 114 is the substantially same as the angle between lines 116 and 118. Light passing through the peripheral optical surface 108 between lines 112 and 114 illuminates region 124 of the focal plane array 102. Light passing through peripheral optical surface 108 between lines 116 and 118 illuminates region 126 of the focal plane array 102. As seen with respect to Figure 2, region 124 and region 126 are subsections of an annular region (124,146) at the focal plane array 102.

The field of view for the entire lens 104 is defined by the angle between lines 112 and 118. In an exemplary embodiment, the angle between line 112 and line 118 is about 80° to about 100° or (as measured between the optical axis 110 and either of line 112 and 118) about 40° to about 50°.

In another embodiment, the peripheral optical surface 108 may have an overall angular field-of view in a range from about 60 degrees to about 120 degrees and the linear optical surface 106 may have an angular field-of-view in a range from about 30 to about 60 degrees.

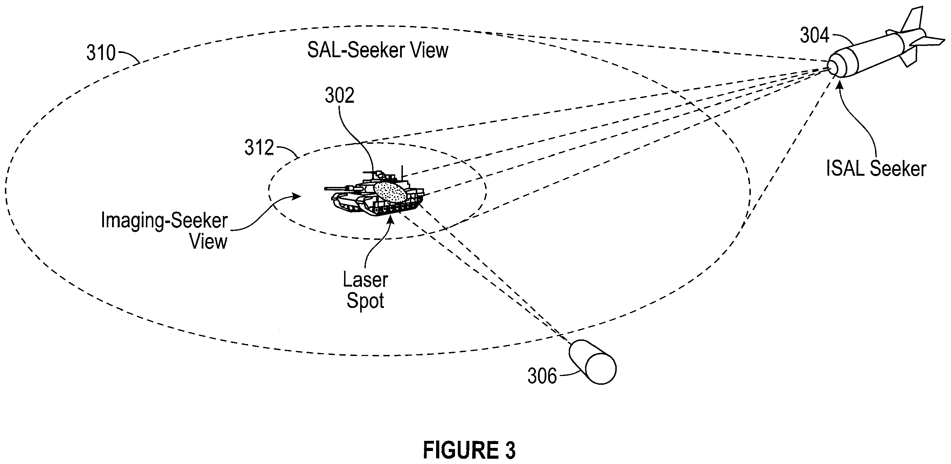

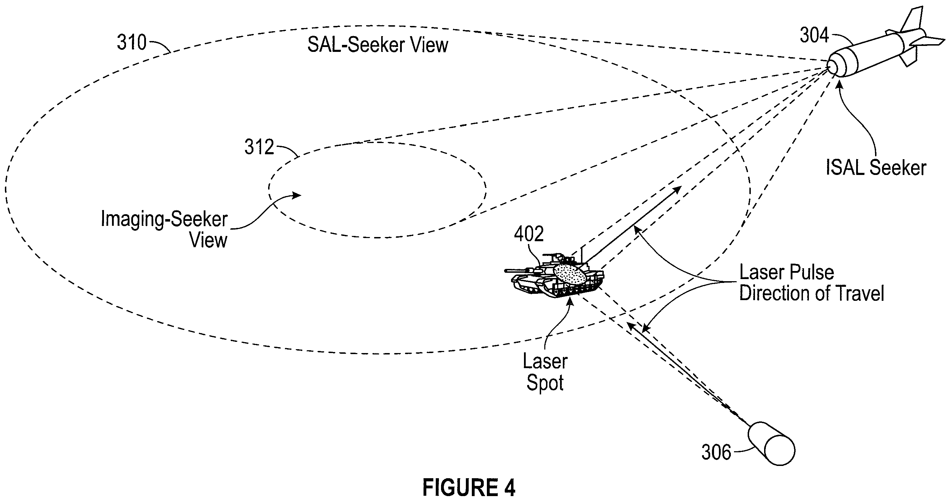

An annular filter 144 may be placed between the lens 104 and the focal plane array 102. The annular filter 144 may filter light that passes through the peripheral optical surface 108 of the lens 104. Light passing through the linear surface 106 is generally unfiltered by annular filter 144. For peripheral light, the annular filter 144 may include a narrow-band filter that filters out the frequencies of ambient sunlight and allows the frequency of a selected laser (see laser 306 in Figures 3 and 4) to pass through unfiltered in order to improve methods of target detection discussed below.

A processor 140 is coupled to the focal plane array 102 and is configured to obtain signals from the pixels of the focal plane array 102. In one aspect, the processor 140 determines from the obtained signals a direction of an object with respect to the optical tracking system 100 and thus with respect to the direction of the projectile being guided by the optical tracking system 100. The processor 140 uses the determined direction of the object to operate an orientation device 142 to re-orient the tracking system 100 and/or the projectile towards the direction of the object.

Figure 2 shows several views of the focal plane array 102 of the exemplary tracking system 100. Annular filter 144 is shown in front of the focal plane array 102 in a side view 215. The exemplary face 200 receives the light directed onto the focal plane array 102 by the lens 104 of Figure 1. As shown in a first head-on view 200 of the focal plane array 102, the face 201 of the focal plane array 102 includes an array of pixels, as indicated by individual squares, such as exemplary pixel 202. A back side of the pixels 202 may be coupled to processor 140 of Figure 1 and provide signals to the processor 140. Shown on the face 201 is a central region 122 defined by the linear optical surface 106 and an annular region (124, 146) defined by peripheral optical surface 108 of lens 104. Light that passes through linear optical surface 106 illuminates pixels in central region 122. The central region 122 generally corresponds to the central region 122 defined by lines 114 and 116 in Figure 1. Light that passes through the peripheral optical surface 108 are focused on pixels in the annular region (122, 124). The annular region (124,126) is defined by lines 112 and 114 and lines 116 and 118 of Figure 1. A set of pixels in corner regions 208 generally do not receive light from either the linear optical surface 106 or the peripheral optical surface 108 and thus are unused. Figure 2 also shows a second head-on view 220 of the focal plane array 102 illustrating the effect of the annular filter 144 at the focal plane array 102. Annular region (122,124) receives filtered light and central region 122 receives unfiltered light.

Figures 3 and 4 illustrate various uses of the optical tracking system 100 of Figure 1 in tracking a target. In an exemplary embodiment, optical tracking system 100 may be operated in at least two modes. Figure 3 illustrates a first tracking mode of the optical tracking system 100 in which a target 302 is overtly tracked by a missile or weapon 304 that includes the optical tracking system 100 to hit the target 302. The first tracking mode may be an overt tracking mode, also referred to as an image-based tracking mode. A laser 306 or suitable light source may be directed onto the target 302 and a reflection of the laser beam from the selected target 302 is collected at the lens 104 and directed onto the central region 122 of the focal plane array 102. In various embodiments, the laser 306 generates a laser beam in a short wave infrared (SWIR) spectrum (from about 1.4 micrometers (µm) to about 3 µm). The focal plane array 102 is therefore also sensitive to the SWIR spectrum.

In the overt tracking mode, light received at the focal plane array 102 is used as input to an image-recognition program run at the processor 140 in order to direct the projectile toward the target 302. In general, this image-based tracking mode is used on object 302 located in region 312. Due to the ability of the target 302 to be imaged effectively at the focal plane array 102, illumination of the target by laser 306 may not be necessary in the overt tracking mode.

In Figure 3, target 302 is substantially in front of or in a line of sight of the tracking system 100 (i.e., substantially along or near the optical axis 110 of lens 104). Figure 3 further shows a second region 310 surrounding the first region 312. Light from objects in first region 310 pass through the linear optical surface 106 and is focused at central region 122 of the focal plane array 102. Light from the second region 310 passes through the peripheral optical surface 108 of lens 104 and is generally mapped to annular region (124, 126) in Figure 2. Objects in this second region 310 may be tracked using a laser-designation mode as discussed in Figure 4.

Figure 4 illustrates a second mode of operation of the optical tracking system 100. The second mode of operation may be referred to herein as a covert tracking mode or a laser-designation tracking mode. In covert tracking mode, the missile 304 is not currently oriented toward the target 402. The covert tracking mode of operation may use laser-designation tracking and may be used primarily for orienting the optical tracking system 100 toward a target 402 that is substantially to the side of the optical tracking system (i.e., in second region 310). However, the covert tracking mode may also be used for target 302 in first region 310 of Figure 3 in various embodiments. Referring back to Figure 4, the image of target 402 formed at the focal plane array 202 may be too small or may have too low a resolution for image-based tracking to be used. However, the image of target 402 is mapped to the annular region (124, 126) and the intensity of the image of the target 402 may be used to track the target 402, as discussed below.

Referring again to Figure 2, in a laser-designation tracking mode, the face 201 may be divided into four quadrants, labeled in Figure 2 as Quadrant 1, Quadrant 2, Quadrant 3 and Quadrant 4. In alternate embodiments, the face 201 may be divided into any number of regions suitable for use with the methods disclosed herein. In an exemplary embodiment, the processor 140 is configured to sum signal strengths (also referred to herein as "signal intensities") for the pixels from a selected quadrant in order to obtain total signal strength for the selected quadrant. The processor 140 then determines which of the four quadrants receives the laser light reflected off of the target from the summed intensities. Since the laser-designation tracking mode relies upon a summation of signal strengths over a quadrant of the face 201, the formation of an image is not a necessary aspect of the laser-designation tracking mode.

An exemplary method for a laser-designation tracking mode is described below. The processor sums the signal strengths for the pixels of each of the four quadrants to obtain total signal strength for each of the four quadrants. The total signal strength values for the quadrants may be compared to each other to determine which quadrant has the greater signal strength. This determination may then be used to steer the projectile toward its designated object so that the lens and photodetector array are aligned with the designated object and light from the designated object passes through the linear linear surface of the lens. In one embodiment, a difference between the values of selected quadrants may be determined and the sign (plus or minus) of the difference may be used to determine a direction in which to re-orient of the projectile. In one embodiment, summed intensities for the left half (i.e., quadrants 1 and 4) and right half (i.e., quadrants 2 and 3) of the face 201 may be compared to each other to determine steering along the horizontal plane of the photodetector array. In another embodiment, summed intensities for the upper half (i.e., quadrants 3 and 4) and lower half (i.e., quadrants 1 and 2) may be compared to each other to determine steering along the vertical plane of the photodetector array. In addition, a peak or maximum pixel value may be obtained. In various embodiments, a gradient of the pixel values may be determined and used to determine a re-orientation direction. The method disclosed above for the laser-designation tracking mode may be used as part of a control loop to continuously guide the projectile toward the designated target.

In an alternate embodiment, the processor 140 may operate in both the laser-designation tracking mode and the image-based tracking mode. When the summed signal strengths for each of the quadrants are balanced in the laser-designation tracking mode, the optical tracking system 100 is centered on the target. This provides an opportunity for the processor 140 to end the laser-designated tracking mode in to switch to the image-based tracking mode.

It may be noted that the laser-designated tracking mode may be used for images formed in either the central region 122 of the annular region (124, 126), while the image-based tracking mode is generally used when the images is formed in the central region 122.

The terminology used herein is for the purpose of describing particular embodiments only and is not intended to be limiting of the invention. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one more other features, integers, steps, operations, element components, and/or groups thereof.

The corresponding structures, materials, acts, and equivalents of all means or step plus function elements in the claims below are intended to include any structure, material, or act for performing the function in combination with other claimed elements as specifically claimed. The description of the present invention has been presented for purposes of illustration and description, but is not intended to be exhaustive or limited to the invention in the form disclosed. Many modifications and variations will be apparent to those of ordinary skill in the art without departing from the scope of the invention. The embodiment was chosen and described in order to best explain the principles of the invention and the practical application, and to enable others of ordinary skill in the art to understand the invention for various embodiments with various modifications as are suited to the particular use contemplated

While the preferred embodiment to the invention had been described, it will be understood that those skilled in the art, both now and in the future, may make various improvements and enhancements which fall within the scope of the claims which follow. These claims should be construed to maintain the proper protection for the invention first described.

## Claims

1. A method of tracking an object (302; 402), comprising:
receiving light from the object at a wide-angle foveated lens (104), the lens having an optical axis (110) and a surface (108, 106) proximate an object space (162) of the lens having a non-linear peripheral portion and an on-axis portion;
directing light received at the on-axis portion (106) onto a central region (122) of a photodetector array (102) located at a focal plane of the lens and directing light received at the non-linear peripheral portion (108) of the lens onto an annular region (126) of the photodetector array;
using a processor (140) to:
use a location at the annular region of the photodetector array of the light passing through the peripheral portion of the lens to determine a direction of the object with respect to the optical axis of the lens; and
using the determined direction to orient the optical axis of the lens toward the object to track the object; and **characterized in that**
the step of determining the direction of the object further comprises summing signal intensities for at least two quadrants of the photodetector array and determining the direction of the object with respect to the optical axis from a difference in the summed signal intensities.

2. The method of claim 1, further comprising comparing summed signal intensities in a first half of the photodetector array to summed signal intensities in a second half of the photodetector array to determine the direction.

3. The method of any preceding claim, wherein the non-linear peripheral portion of the lens is shaped to project light from the object into a region along a perimeter of the photodetector array when the photodetector array is at a focal plane of the on-axis surface of the lens.

4. The method of any preceding claim, further comprising illuminating the object with a light source (306) to produce a reflected light for detection at the annular region of the photodetector array.

5. The method of claim 4, wherein the light source further includes a laser generating light in the short-wave infrared spectrum.

6. The method of claim 4, further comprising using an annular filter (144) to filter the light directed onto the annular region to remove frequencies of light other than the frequency of the light source.

7. The method of any preceding claim, wherein the lens and the photodetector array are coupled to a projectile (304), further comprising using the determined direction to orient the projectile towards the object.

8. A system for tracking an object (302; 402), comprising:
a photodetector array (102) for receiving light from the object;
a wide-angle foveated lens (104) arranged so that the photodetector array is in a focal plane of the lens, the lens having an optical axis (110) and a surface (106, 108) proximate an object space (162) having an on-axis portion (106) providing an image of the object at a central region (122) of the photodetector array and a non-linear peripheral portion (108) away from the optical axis of the lens for directing light received from the object onto an annular region (126) of the photodetector array; and
a processor (140) configured to:
determine a direction of the object with respect to the optical axis from a location on the photodetector array of the light directed onto the annular region of the photodetector array through the non-linear peripheral portion of the lens,
use the determined direction to orient the optical axis of the lens toward the object to track the object; and **characterized in that**
the processor is further configured to determine the direction of the object by summing signal intensities for at least two quadrants of the photodetector array and determining a difference in the summed signal intensities.

9. The system of claim 8, wherein the processor is further configured to compare summed signal intensities in a first half of the photodetector array to summed signal intensities in a second half of the photodetector array to determine the direction.

10. The system of any one of claims 8 or 9, wherein the peripheral portion of the lens is shaped to project light from the object into a region along a perimeter of the photodetector array when the photodetector array is at a focal plane of the on-axis surface of the lens.

11. The system of any one of claims 8 to 10, further comprising a light source (306) configured to illuminate the object to produce a reflected light for direction onto the photodetector array.

12. The system of claim 11, wherein the light source further includes a laser generating light in the short-wave infrared spectrum.

13. The system of claim 11, further comprising an annular narrow-band filter (144) configured to pass light onto the annular region of the photodetector at a frequency of the light source.

## Patentansprüche

1. Verfahren zum Verfolgen eines Objekts (302; 402), umfassend:
Empfangen von Licht von dem Objekt an einer Weitwinkellinse mit Grube (104), wobei die Linse eine optische Achse (110) und eine Oberfläche (108, 106) nahe einem Objektraum (162) der Linse aufweist, der einen nicht linearen peripheren Abschnitt und einen auf der Achse befindlichen Abschnitt aufweist;
Lenken des Lichts, das an dem auf der Achse befindlichen Abschnitt (106) empfangen wird, auf einen zentralen Bereich (122) eines Photodetektor-Arrays (102), das auf einer Fokalebene der Linse angeordnet ist, und Lenken des Lichts, das an dem nicht linearen peripheren Abschnitt (108) der Linse empfangen wird, auf einen ringförmigen Bereich (126) des Photodetektor-Arrays;
Verwenden eines Prozessors (140), um:
eine Position des Lichts, das durch den peripheren Abschnitt der Linse durchtritt, auf dem ringförmigen Bereich des Photodetektor-Arrays zu verwenden, um eine Richtung des Objekts in Bezug auf die optische Achse der Linse zu bestimmen; und
Verwenden der bestimmten Richtung, um die optische Achse der Linse auf das Objekt auszurichten, um das Objekt zu verfolgen; und **dadurch gekennzeichnet, dass**
der Schritt des Bestimmens der Richtung des Objekts ferner das Summieren der Signalstärken für mindestens zwei Quadranten des Photodetektor-Arrays und das Bestimmen der Richtung des Objekts in Bezug auf die optische Achse aus einer Differenz der summierten Signalstärken umfasst.

2. Verfahren nach Anspruch 1, ferner umfassend das Vergleichen der summierten Signalstärken in einer ersten Hälfte des Photodetektor-Arrays mit den summierten Signalstärken in einer zweiten Hälfte des Photodetektor-Arrays, um die Richtung zu bestimmen.

3. Verfahren nach einem der vorstehenden Ansprüche, wobei der nicht lineare periphere Abschnitt der Linse so geformt ist, dass er Licht von dem Objekt in einen Bereich entlang eines Umfangs des Photodetektor-Arrays projiziert, wenn sich das Photodetektor-Array auf einer Fokalebene der auf der Achse befindlichen Fläche der Linse befindet.

4. Verfahren nach einem der vorstehenden Ansprüche, ferner umfassend das Beleuchten des Objekts mit einer Lichtquelle (306), um ein reflektiertes Licht zur Erkennung an dem ringförmigen Bereich des Photodetektor-Arrays zu erzeugen.

5. Verfahren nach Anspruch 4, wobei die Lichtquelle ferner einen Laser beinhaltet, der Licht im kurzwelligen Infrarotspektrum erzeugt.

6. Verfahren nach Anspruch 4, ferner umfassend das Verwenden eines ringförmigen Filters (144), um das Licht, das auf den ringförmigen Bereich gelenkt wird, zu filtern, um andere Lichtfrequenzen als die Frequenzen der Lichtquelle zu entfernen.

7. Verfahren nach einem der vorstehenden Ansprüche, wobei die Linse und das Photodetektor-Array mit einem Projektil (304) gekoppelt sind, ferner umfassend das Verwenden der bestimmten Richtung, um das Projektil auf das Objekt auszurichten.

8. System zum Verfolgen eines Objekts (302; 402), umfassend:
ein Photodetektor-Array (102) zum Empfangen von Licht von dem Objekt;
eine Weitwinkellinse mit Grube (104), die so angeordnet ist, dass sich das Photodetektor-Array in einer Fokalebene der Linse befindet, wobei die Linse eine optische Achse (110) und eine Oberfläche (106, 108) nahe einem Objektraum (162) aufweist, der einen auf der Achse befindlichen Abschnitt (106), der ein Bild des Objekts an einem zentralen Bereich (122) des Photodetektor-Arrays bereitstellt, und einen nicht linearen peripheren Bereich (108) von der optischen Achse der Linse entfernt aufweist, um Licht, das von dem Objekt empfangen wird, auf einen ringförmigen Bereich (126) des Photodetektor-Arrays zu lenken; und
einen Prozessor (140), der konfiguriert ist, um:
eine Richtung des Objekts in Bezug auf die optische Achse aus einer Position auf dem Photodetektor-Array des Lichts, das auf den ringförmigen Bereich des Photodetektor-Arrays durch den nicht linearen peripheren Bereich der Linse gelenkt wird, zu bestimmen,
die bestimmte Richtung zu verwenden, um die optische Achse der Linse auf das Objekt auszurichten, um das Objekt zu verfolgen; und **dadurch gekennzeichnet, dass**
der Prozessor ferner konfiguriert ist, um die Richtung des Objekts durch Summieren der Signalstärken für mindestens zwei Quadranten des Photodetektor-Arrays und Bestimmen einer Differenz der summierten Signalstärken zu bestimmen.

9. System nach Anspruch 8, wobei der Prozessor ferner konfiguriert ist, um summierte Signalstärken in einer ersten Hälfte des Photodetektor-Arrays mit summierten Signalstärken in einer zweiten Hälfte des Photodetektor-Arrays zu vergleichen, um die Richtung zu bestimmen.

10. System nach einem der Ansprüche 8 oder 9, wobei der periphere Abschnitt der Linse so geformt ist, dass er Licht von dem Objekt in einen Bereich entlang eines Umfangs des Photodetektor-Arrays projiziert, wenn sich das Photodetektor-Array auf einer Fokalebene der auf der Achse befindlichen Fläche der Linse befindet.

11. System nach einem der Ansprüche 8 bis 10, ferner umfassend eine Lichtquelle (306), die konfiguriert ist, um das Objekt zu beleuchten, um ein reflektiertes Licht zum Lenken auf das Photodetektor-Array zu erzeugen.

12. System nach Anspruch 11, wobei die Lichtquelle ferner einen Laser beinhaltet, der Licht im kurzwelligen Infrarotspektrum erzeugt.

13. System nach Anspruch 11, ferner umfassend einen ringförmigen Schmalbandfilter (144), der konfiguriert ist, um Licht auf den ringförmigen Bereich des Photodetektors mit einer Frequenz der Lichtquelle durchzulassen.

## Revendications

1. Procédé de suivi d'un objet (302 ; 402), comprenant :
la réception de lumière provenant de l'objet au niveau d'une lentille fovéale grand-angle (104), la lentille ayant un axe optique (110) et une surface (108, 106) proche d'un espace d'objet (162) de la lentille ayant une partie périphérique non linéaire et une partie dans l'axe ;
la direction de la lumière reçue au niveau de la partie dans l'axe (106) sur une région centrale (122) d'un réseau de photodétecteurs (102) situé au niveau d'un plan focal de la lentille et la direction de la lumière reçue au niveau de la partie périphérique non linéaire (108) de la lentille sur une région annulaire (126) du réseau de photodétecteurs ;
l'utilisation d'un processeur (140) pour :
utiliser un emplacement au niveau de la région annulaire du réseau de photodétecteurs de la lumière traversant la partie périphérique de la lentille pour déterminer une direction de l'objet par rapport à l'axe optique de la lentille ; et
l'utilisation de la direction déterminée pour orienter l'axe optique de la lentille vers l'objet afin de suivre l'objet ; et **caractérisé en ce que**
l'étape de détermination de la direction de l'objet comprend en outre l'addition des intensités de signal pour au moins deux quadrants du réseau de photodétecteurs et de détermination de la direction de l'objet par rapport à l'axe optique à partir d'une différence dans les intensités de signal additionnées.

2. Procédé selon la revendication 1, comprenant en outre la comparaison d'intensités de signal additionnées dans une première moitié du réseau de photodétecteurs avec des intensités de signal additionnées dans une seconde moitié du réseau de photodétecteurs afin de déterminer la direction.

3. Procédé selon une quelconque revendication précédente, dans lequel la partie périphérique non linéaire de la lentille est formée pour projeter de la lumière provenant de l'objet dans une région située le long d'un périmètre du réseau de photodétecteurs lorsque le réseau de photodétecteurs se situe au niveau d'un plan focal de la surface dans l'axe de la lentille.

4. Procédé selon une quelconque revendication précédente, comprenant en outre l'illumination de l'objet avec une source de lumière (306) afin de produire une lumière réfléchie pour une détection au niveau de la région annulaire du réseau de photodétecteurs.

5. Procédé selon la revendication 4, dans lequel la source de lumière comprend en outre un laser générant de la lumière dans le spectre infrarouge à ondes courtes.

6. Procédé selon la revendication 4, comprenant en outre l'utilisation d'un filtre annulaire (144) pour filtrer la lumière dirigée sur la région annulaire afin d'éliminer les fréquences de lumière autres que la fréquence de la source de lumière.

7. Procédé selon une quelconque revendication précédente, dans lequel la lentille et le réseau de photodétecteurs sont couplés à un projectile (304), comprenant en outre l'utilisation de la direction déterminée pour orienter le projectile vers l'objet.

8. Système de suivi d'un objet (302 ; 402), comprenant :
un réseau de photodétecteurs (102) pour recevoir la lumière provenant de l'objet ;
une lentille fovéale grand-angle (104) agencée de sorte que le réseau de photodétecteurs se situe dans un plan focal de la lentille, la lentille ayant un axe optique (110) et une surface (106, 108) à proximité d'un espace d'objet (162) ayant une partie dans l'axe (106) fournissant une image de l'objet au niveau d'une région centrale (122) du réseau de photodétecteurs et une partie périphérique non linéaire (108) distante de l'axe optique de la lentille pour diriger la lumière réfléchie depuis l'objet sur une région annulaire (126) du réseau de photodétecteurs ; et
un processeur (140) configuré pour :
déterminer une direction de l'objet par rapport à l'axe optique depuis un emplacement sur le réseau de photodétecteurs de la lumière dirigée sur la région annulaire du réseau de photodétecteurs à travers la partie périphérique non linéaire de la lentille,
utiliser la direction déterminée pour orienter l'axe optique de la lentille vers l'objet afin de suivre l'objet ; et **caractérisé en ce que**
le processeur est en outre configuré pour déterminer la direction de l'objet en additionnant des intensités de signal pour au moins deux quadrants du réseau de photodétecteurs et en déterminant une différence dans les intensités de signal additionnées.

9. Système selon la revendication 8, dans lequel le processeur est en outre configuré pour comparer des intensités de signal additionnées dans une première moitié du réseau de photodétecteurs avec des intensités de signal additionnées dans une seconde moitié du réseau de photodétecteurs afin de déterminer la direction.

10. Système selon l'une quelconque des revendications 8 ou 9, dans lequel la partie périphérique de la lentille est formée pour projeter de la lumière provenant de l'objet dans une région située le long d'un périmètre du réseau de photodétecteurs lorsque le réseau de photodétecteurs se situe au niveau d'un plan focal de la surface dans l'axe de la lentille.

11. Système selon l'une quelconque des revendications 8 à 10, comprenant en outre une source de lumière (306) configurée pour illuminer l'objet afin de produire une lumière réfléchie pour la diriger sur le réseau de photodétecteurs.

12. Système selon la revendication 11, dans lequel la source de lumière comprend en outre un laser générant de la lumière dans le spectre infrarouge à ondes courtes.

13. Système selon la revendication 11, comprenant en outre un filtre annulaire à bande étroite (144) configuré pour laisser passer la lumière sur la région annulaire du photodétecteur à une fréquence de la source de lumière.
